(19)

Europäisches
Patentamt
European
Patent Office
Office européen
des brevets

(11) **EP 4 641 489 A1**

(12) **EUROPEAN PATENT APPLICATION**
published in accordance with Art. 153(4) EPC

(43) Date of publication:
**29.10.2025  Bulletin 2025/44**

(21) Application number: **24767476.5**

(22) Date of filing: **16.02.2024**

(51) International Patent Classification (IPC):
**G06T 7/00** (2017.01)     **G06V 10/40** (2022.01)
**G06V 10/776** (2022.01)    **G06T 3/60** (2024.01)
**G06T 5/20** (2006.01)      **G06T 3/40** (2024.01)
**G06N 3/0464** (2023.01)

(52) Cooperative Patent Classification (CPC):
**G06V 10/771; G06N 3/0464; G06T 3/40;**
**G06T 3/60; G06T 5/20; G06T 7/00; G06T 7/0002;**
**G06V 10/40; G06V 10/776; G06V 10/82;**
G06T 2207/20081; G06T 2207/20084;
G06T 2207/30168

(86) International application number:
**PCT/KR2024/095318**

(87) International publication number:
**WO 2024/186190 (12.09.2024 Gazette 2024/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **07.03.2023  KR 20230030046**
           **26.06.2023  KR 20230082127**

(71) Applicant: Samsung Electronics Co., Ltd.
**Suwon-si, Gyeonggi-do 16677 (KR)**

(72) Inventors:
• **KIM, Wookhyung**
 **Suwon-si, Gyeonggi-do 16677 (KR)**
• **KOO, Jayoon**
 **Suwon-si, Gyeonggi-do 16677 (KR)**
• **KIM, Namuk**
 **Suwon-si, Gyeonggi-do 16677 (KR)**
• **CHO, Ilhyun**
 **Suwon-si, Gyeonggi-do 16677 (KR)**

(74) Representative: **Appleyard Lees IP LLP**
**15 Clare Road**
**Halifax HX1 2HY (GB)**

(54) **ELECTRONIC DEVICE FOR EVALUATING QUALITY OF IMAGE, AND METHOD OF OPERATING ELECTRONIC DEVICE**

(57)    Provided are an electronic apparatus for evaluating the quality of an image and an operating method of the electronic apparatus. The electronic apparatus includes a memory in which at least one instruction is stored and at least one processor configured to execute the at least one instruction stored in the memory to obtain the image, extract a feature map including a feature of the image based on the image, calculate a quality score for each reference region of the image based on the extracted feature map, calculate an importance for each reference region of the image based on the extracted feature map, and evaluate the quality of the image according to a final quality score of the image calculated based on the quality score for each reference region and the importance for each reference region.

FIG. 3

**Description**

Technical Field

The disclosure relates to an electronic apparatus and an operating method of the same. More particularly, the disclosure relates to an electronic apparatus for evaluating the quality of an image and an operating method of the electronic apparatus.

Background Art

With the development and use of electronic apparatuses, a method of evaluating the quality of an image has been studied in an operation of displaying an image or converting the quality, size, and shape of an image.

Image quality evaluation methods include a reference image quality evaluation method that refers to an evaluation reference image or a no-reference image quality evaluation method that performs evaluation without a reference image. Image quality evaluation may be determined based on an indicator such as Pearson's linear correlation coefficient (PLCC) or Spearman's rank order correlation coefficient (SRCC).

With recent developments in technology, deep learning-based no-reference image quality evaluation methods have been actively studied. In particular, with the development of transformer technology, the performance of no-reference image quality evaluation methods has also been improved.

Disclosure

Technical Solution

An embodiment of the disclosure provides an electronic apparatus for evaluating quality of an image. The electronic apparatus may include a memory in which at least one instruction is stored, and at least one processor configured to execute the at least one instruction stored in the memory. The at least one processor may be configured to obtain an image, by executing the at least one instruction. The at least one processor may be configured to extract a feature map including a feature of the image based on the image, by executing the at least one instruction. The at least one processor may be configured to calculate a quality score for each reference region of the image, based on the extracted feature map, by executing the at least one instruction. The at least one processor may be configured to calculate an importance for each reference region of the image, based on the extracted feature map, by executing the at least one instruction. The at least one processor may be configured to evaluate the quality of the image according to a final quality score of the image calculated based on the quality score for each reference region and the importance for each reference region, by executing the at least one instruction.

An embodiment of the disclosure provides an operating method of an electronic apparatus for evaluating quality of an image. The operating method of the electronic apparatus may include a step of obtaining the image. The operating method of the electronic apparatus may include a step of extracting a feature map including a feature of the image based on the image. The operating method of the electronic apparatus may include a step of calculating a quality score for each reference region of the image, based on the extracted feature map. The operating method of the electronic apparatus may include a step of calculating an importance for each reference region of the image, based on the extracted feature map. The operating method of the electronic apparatus may include a step of evaluating the quality of the image according to a final quality score of the image calculated based on the quality score for each reference region and the importance for each reference region.

According to an embodiment of the disclosure, there may be provided a computer-readable recording medium having recorded thereon a program for performing at least one of embodiments of the operating method on a computer.

Description of Drawings

The disclosure may be understood from the following detailed description in conjunction with the accompanying drawings, and reference numerals denote structural elements.

FIG. 1 is a block diagram for describing a configuration of an electronic apparatus, according to an embodiment of the disclosure.

FIG. 2 is a flowchart for describing an operating method of an electronic apparatus, according to an embodiment of the disclosure.

FIG. 3 is a diagram for describing an operation of an electronic apparatus, according to an embodiment of the disclosure.

FIG. 4A is a diagram for describing an operation of extracting a feature map based on an image, according to an embodiment of the disclosure.

FIG. 4B is a diagram for describing an operation of extracting a feature map based on an image, according to an embodiment of the disclosure.

FIG. 5 is a diagram for describing a window used in a revised-shifted window (Swin) transformer model, according to an embodiment of the disclosure.

FIG. 6 is a diagram for describing a window used in a revised-Swin transformer model, according to an embodiment of the disclosure.

FIG. 7 is a diagram for describing an operation of calculating a quality score for each reference region, according to an embodiment of the disclosure.

FIG. 8 is a diagram for describing an operation of calculating an importance for each reference region, according to an embodiment of the disclosure.

FIG. 9 is a diagram for describing a filter used in an operation of calculating an importance for each reference region, according to an embodiment of the disclosure.

FIG. 10 is a diagram for describing a method of training a model used in an operating method of an electronic apparatus for evaluating the quality of an image, according to an embodiment of the disclosure.

FIG. 11 is a diagram for describing a display apparatus using an image quality evaluation method, according to an embodiment of the disclosure.

FIG. 12 is a diagram for describing an electronic apparatus using an image quality evaluation method, according to an embodiment of the disclosure.

Mode for Invention

The terms used herein will be briefly described, and an embodiment of the disclosure will be described in detail.

The terms used herein are general terms currently widely used in the art in consideration of functions in an embodiment of the disclosure, but the terms may vary according to the intention of one of ordinary skill in the art, precedents, or new technology in the art. Also, some terms may be arbitrarily selected by the applicant, and in this case, the meaning of the selected terms will be described in detail in the detailed description of an embodiment of the disclosure. Accordingly, the specific terms used herein should be defined based on the unique meanings thereof and the whole context of the disclosure.

The singular forms "a," "an," and "the" are intended to include the plural forms as well, unless the context clearly indicates otherwise. The terms used herein, including technical or scientific terms, may have the same meaning as commonly understood by one of ordinary skill in the art described in the disclosure.

When a portion "includes" an element, another element may be further included, rather than excluding the existence of the other element, unless otherwise described. Also, the terms such as "... unit" or "module" refer to units that perform at least one function or operation, and the units may be implemented as hardware or software or as a combination of hardware and software.

According to the situation, the expression "configured to" used herein may be used as, for example, the expression "suitable for", "having the capacity to", "designed to", "adapted to", "made to", or "capable of". The term "configured (or set) to" does not always mean only "specifically designed to" in hardware. Instead, the expression "a system configured to" may mean that the system is "capable of" operating together with another device or other parts. For example, "a processor configured (or set) to perform A, B, and C" may be a dedicated processor (e.g., an embedded processor) for performing a corresponding operation or a generic-purpose processor (such as a central processing unit (CPU) or an application processor) that may perform a corresponding operation by executing at least one software program stored in a memory.

Also, in the disclosure, it will be understood that when elements are "connected" or "coupled" to each other, the elements may be directly connected or coupled to each other, but may alternatively be connected or coupled to each other with an intervening element therebetween, unless specified otherwise.

An embodiment of the disclosure will now be described more fully with reference to the accompanying drawings for one of ordinary skill in the art to be able to perform the embodiment of the disclosure without any difficulty. However, an embodiment of the disclosure may be implemented in many different forms and is not limited to the embodiment described herein. Also, in the drawings, parts irrelevant to the description are omitted in order to clearly describe an embodiment of the disclosure, and like reference numerals denote like elements throughout the disclosure.

Hereinafter, embodiments of the disclosure will be described in detail with reference to the drawings.

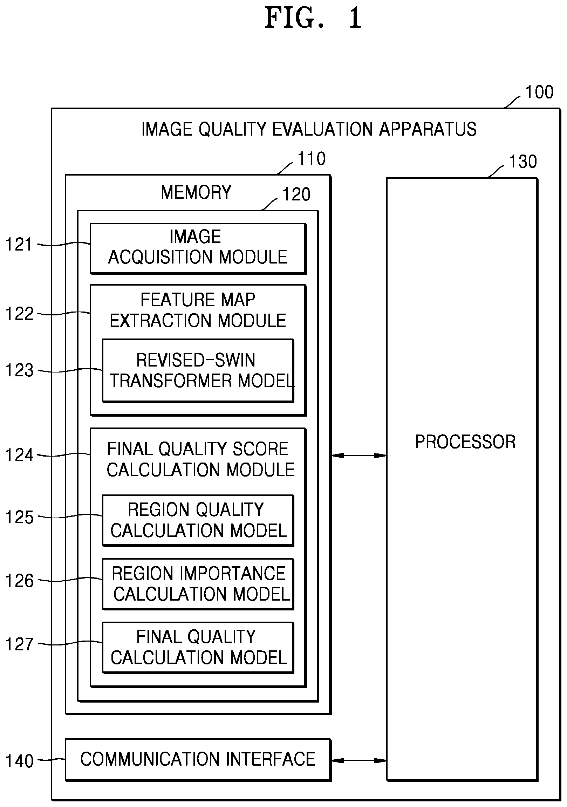

FIG. 1 is a block diagram for describing a configuration of an electronic apparatus, according to an embodiment of the disclosure.

Referring to FIG. 1, in an embodiment, an image quality evaluation apparatus 100 may be an electronic apparatus for evaluating the quality of an image. The image quality evaluation apparatus 100 may obtain an image and evaluate the quality of the image. In an embodiment, image quality evaluation may include a reference image quality assessment (R-IQA) method of comparing a reference image with an image to be evaluated and determining the quality of the image to be evaluated or a no-reference image quality assessment (NR-IQA) method of calculating a score indicating the quality of an image to be evaluated according to a preset criterion and determining the quality of the image to be evaluated based on the calculated score. In this case, the image to be evaluated may be an image obtained by the image quality evaluation apparatus 100.

In an embodiment, the image quality evaluation apparatus 100 and an operating method of the image quality evaluation apparatus according to the disclosure may be an electronic apparatus for evaluating the quality of an image to be evaluated for an NR-IQA method and an operating method of the electronic apparatus. Hereinafter, for convenience of explanation, the image quality evaluation apparatus 100 is referred to as an electronic apparatus 100 for evaluating the quality of an image, and the operating method of the image quality evaluation apparatus 100 is referred to as an operating method of the electronic apparatus 100 for evaluating the quality of an image.

In an embodiment, the electronic apparatus 100 may include a memory 110, at least one processor 130, and a communication interface 140. However, not all of the components shown in FIG. 1 are essential components. The electronic apparatus 100 may include more or fewer components than those shown in FIG. 1. In an embodiment, the memory 110, the at least one processor 130, and the communication interface 140 may be electrically and/or physically connected to each other.

In an embodiment, instructions, data structures, and program code readable by the at least one processor 130 may be stored in the memory 110. In an embodiment, there may be one or more memories 110. In disclosed embodiments, operations performed by the at least one processor 130 may be implemented by executing instructions or code of a program stored in the memory 110.

In an embodiment, the memory 110 may include at least one of a flash memory type, a hard disk type, a multimedia card micro type, a card-type memory (e.g., SD or XD memory), a random-access memory (RAM), a static random-access memory (SRAM), a read-only memory (ROM), an electrically erasable programmable read-only memory (EEPROM), a programmable read-only memory (PROM), a mask ROM, a flash ROM, a hard disk drive (HDD), or a solid-state drive (SSD). Instructions or program code for performing functions or operations of the electronic apparatus 100 may be stored in the memory 110. Instructions, algorithms, data structures, program code, and application programs stored in the memory 110 may be implemented in a programming or scripting language such as C, C++, Java, or assembler.

In an embodiment, an image quality evaluation module 120 that may be used to obtain an image and evaluate the quality of the obtained image may be stored in the memory 110. In an embodiment, the image quality evaluation module 120 may include an image acquisition module 121, a feature map extraction module 122, and a final quality score calculation module 124. The image acquisition module 121, the feature map extraction module 122, and the final quality score calculation module 124 may be stored in the memory 110. However, not all of the modules shown in FIG. 1 are essential modules. More or fewer modules than those shown in FIG. 1 may be stored in the memory 110.

In an embodiment, a 'module' included in the memory 110 may refer to a unit that processes a function or an operation performed by the at least one processor 130. A 'module' included in the memory 110 may be implemented as software such as instructions, algorithms, data structures, or program code.

In an embodiment, the image acquisition module 121 may include instructions or program code related to an operation or a function of obtaining an image. The image acquisition module 121 may include instructions or program code related to an operation or a function of receiving an image from an external server or peripheral electronic apparatuses. The image acquisition module 121 may include an image acquisition model. In an embodiment, the at least one processor 130 may obtain an image that is subjected to quality evaluation, by executing the instructions or the program code of the image acquisition module 121.

In an embodiment, the feature map extraction module 122 may include instructions or program code related to an operation or a function of extracting a feature map including a feature of an image based on the image. In an embodiment, the feature map extraction module 122 may include a revised-shifted window (Swin) transformer model 123. The feature map extraction module 122 may include instructions or program code related to an operation or a function of extracting a feature map from an image by using the revised-Swin transformer model 123. Although the feature map extraction module 122 includes the revised-Swin transformer model in FIG. 1, the disclosure is not limited thereto. In an embodiment, the feature map extraction module 122 may include a Swin transformer model. The feature map extraction module 122 may include instructions or program code related to an operation or a function of extracting a feature map from an image by using the Swin transformer model.

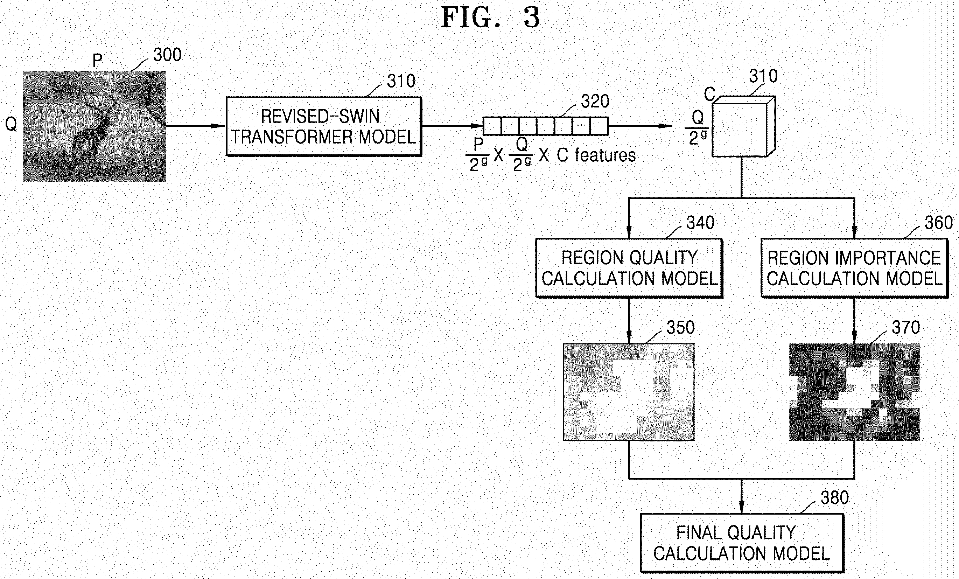

In an embodiment, the at least one processor 130 may extract a feature map from an image, by executing the instructions or the program code of the feature map extraction module 122. The at least one processor 130 may extract a feature map from an image by using the Swin transformer model or the revised-Swin transformer model included in the feature map extraction module 122. An operation of extracting a feature map from an image by using the Swin transformer model and the revised-Swin transformer model will be described below with reference to FIGS. 3 to 6.

In an embodiment, the final quality score calculation module 124 may include instructions or program code related to an operation or a function of calculating a final quality score for evaluating the quality of an image based on an extracted feature map. In an embodiment, the at least one processor 130 may calculate a final quality score for evaluating the quality of an image based on an extracted feature map, by executing the instructions or the program code of the final quality score calculation module 124.

In an embodiment, the final quality score calculation module 124 may include a region quality calculation model 125, a region importance calculation model 126, and a final quality calculation model 127.

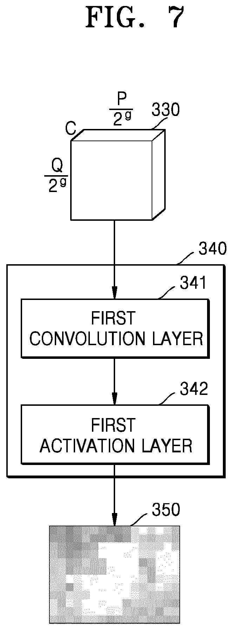

In an embodiment, the final quality score calculation module 124 may include instructions or program code related to an operation or a function of calculating a quality score for each reference region of an image based on an extracted feature map, by using the region quality calculation model 125. The at least one processor 130 may calculate a quality score for each reference region of an image based on an extracted feature map, by using the region quality calculation model 125 included in the final quality score calculation module 124. An operation of calculating a quality score for each reference region of an image based on an extracted feature map by using the region quality calculation model 125 will be described below with reference to FIG. 7.

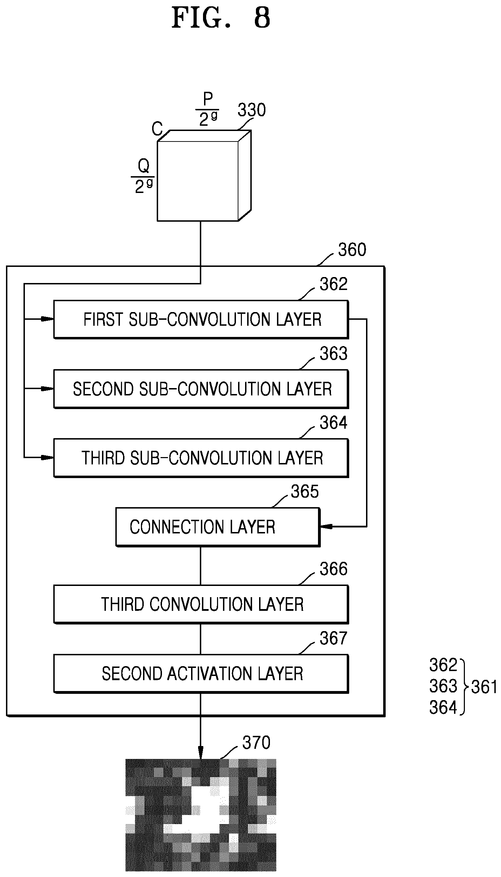

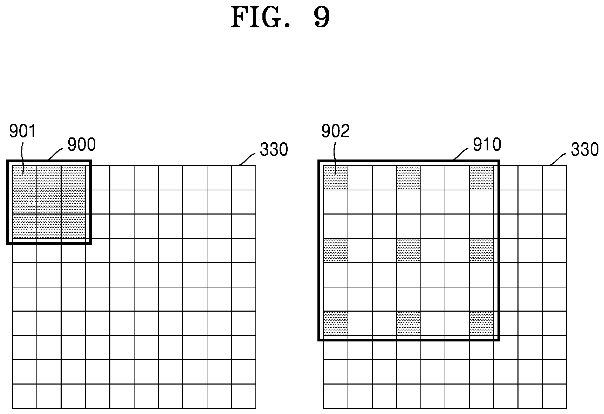

In an embodiment, the final quality score calculation module 124 may include instructions or program code related to an operation or a function of calculating an importance for each reference region of an image based on an extracted feature map, by using the region importance calculation model 126. The at least one processor 130 may calculate an importance for each reference region of an image based on an extracted feature map, by using the region importance calculation model 126 included in the final quality score calculation module 124. An operation of calculating an importance for each reference region of an image based on an extracted feature map by using the region importance calculation model 126 will be described below with reference to FIGS. 8 and 9.

In an embodiment, the final quality score calculation module 124 may include instructions or program code related to an operation or a function of calculating a final quality score of an image based on a calculated quality score for each reference region and a calculated importance for each reference region, by using the final quality calculation model 127. The at least one processor 130 may calculate a final quality score of an image based on a quality score for each reference region and an importance for each reference region of the image, by using the final quality calculation model 127 included in the final quality score calculation module 124. An operation of calculating a final quality score of an image based on a quality score for each reference region and an importance for each reference region of the image by using the final quality calculation model 127 will be described below with reference to FIG. 3.

In an embodiment, the image quality evaluation module 120 may include an image quality evaluation model for determining the quality of an image from a final quality score of the image. The image quality evaluation module 120 may include instructions or program code related to an operation or a function of evaluating the quality of an image from a final quality score, by using the image quality evaluation model. The at least one processor 130 may evaluate the quality of an image from a final quality score, by executing the instructions or the program code of the image quality evaluation module 120. The at least one processor 130 may evaluate the quality of an image from a final quality score by using the image quality evaluation model included in the image quality evaluation module 120.

However, the disclosure is not limited thereto, and the image quality evaluation model may be included in the final quality score calculation module 124 or may be included in the final quality calculation model 127.

In an embodiment, the at least one processor 130 may include at least one of, but not limited to, a central processing unit, a microprocessor, a graphics processing unit, an application processor (AP), an application-specific integrated circuit (ASIC), a digital signal processor (DSP), a digital signal processing device (DSPD), a programmable logic device (PLD), a field-programmable gate array (FPGA), a neural processing unit, or a dedicated artificial intelligence (AI) processor designed in a hardware structure specialized for training and processing an AI model.

In an embodiment of the disclosure, when one or more processors included in the at least one processor 130 are AI processors, the AI processors may each be designed to have a hardware structure specialized for processing a specific AI model.

In an embodiment of the disclosure, the at least one processor 130 may include circuitry such as a system on chip (SoC) or an integrated circuit (IC).

In an embodiment of the disclosure, the at least one processor 130 may execute various types of modules stored in the memory 110. The at least one processor 130 may execute at least one instruction constituting the various types of modules stored in the memory 110. The at least one processor 130 may process data according to predefined operation rules or an AI model, by executing the at least one instruction or program stored in the memory 110.

In an embodiment of the disclosure, the at least one processor 130 may execute at least one of the image acquisition module 121, the feature map extraction module 122, or the final quality score calculation module 124 stored in the memory 110.

In an embodiment of the disclosure, the at least one processor 130 may include a plurality of processors.

In an embodiment of the disclosure, at least one of the image acquisition module 121, the feature map extraction module 122, or the final quality score calculation module 124 stored in the memory 110 may be executed by any one of the plurality of processors.

In an embodiment, the communication interface 140 may perform data communication with an external server under the control of the at least one processor 130. Also, the communication interface 140 may perform data communication not only with the external server but also with other peripheral electronic apparatuses. The communication interface 140 may perform data communication with the server or other peripheral electronic apparatuses by using at least one of data communication methods including, for example, wired local area network (LAN), wireless LAN, Wi-Fi, Bluetooth, Zigbee, Wi-Fi Direct (WFD), infrared data association (IrDA), Bluetooth low energy (BLE), near-field communication (NFC), wireless broadband Internet (Wibro), world interoperability for microwave access (WiMAX), shared wireless access protocol (SWAP), wireless gigabit alliance (WiGig), and radio frequency (RF) communication.

In an embodiment, the at least one processor 130 may receive, from the external server or the peripheral electronic apparatuses, an image that is subjected to quality evaluation through the communication interface 140. In an embodiment, the at least one processor 130 may receive, from the external server or the peripheral electronic apparatuses, the Swin transformer model, the revised-Swin transformer model 123, the region quality calculation model 125, the region importance calculation model 126, and the final quality calculation model 127 through the communication interface 140.

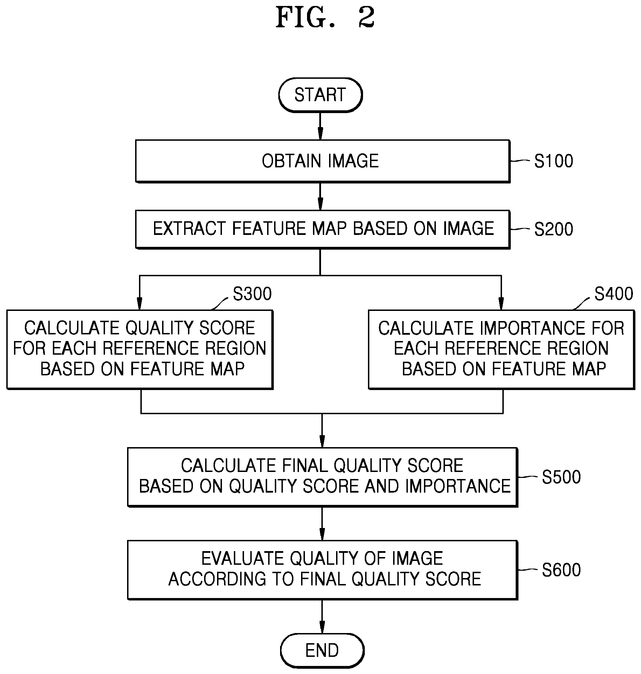

FIG. 2 is a flowchart for describing an operating method of an electronic apparatus, according to an embodiment of the disclosure.

Referring to FIGS. 1 and 2, in an embodiment, an operating method of the electronic apparatus 100 for evaluating the quality of an image may include a step S100 of obtaining an image. In an embodiment, in the step of S100 of obtaining an image, at least one processor 130 may obtain an image by executing instructions or program code of the image acquisition module 121.

In an embodiment, the operating method of the electronic apparatus 100 for evaluating the quality of an image may include a step S200 of extracting a feature map including a feature of the image based on the obtained image. In an embodiment, in the step S200 of extracting a feature map, the at least one processor 130 may obtain an image by executing instructions or program code of the feature map extraction module 122. The least one processor 130 may extract a feature map including a feature of the image, by inputting the image to the Swin transformer model or the revised-Swin transformer model 123.

In an embodiment, the operating method of the electronic apparatus 100 for evaluating the quality of an image may include a step S300 of calculating a quality score for each reference region of the image based on the extracted feature map. In an embodiment, in the step S300 of calculating a quality score for each reference region of the image, the at least one processor 130 may obtain an image by executing instructions or program code of the final quality score calculation module 124. The at least one processor 130 may calculate a quality score for each reference region of the image, by inputting the feature map to the region quality calculation model 125.

In an embodiment, the operating method of the electronic apparatus 100 for evaluating the quality of an image may include a step S400 of calculating an importance for each reference region of the image based on the extracted feature map. In an embodiment, in the step S400 of calculating an importance for each reference region of the image, the at least one processor 130 may obtain an image by executing the instructions or the program code of the final quality score calculation module 124. The at least one processor 130 may calculate an importance for each reference region of the image, by inputting the feature map to the region importance calculation model 126.

In an embodiment, the operating method of the electronic apparatus 100 for evaluating the quality of an image may include a step S500 of calculating a final quality score of the image, based on the quality score for each reference region and the importance for each reference region. In an embodiment, in the step S500 of calculating a final quality score of the image, the at least one processor 130 may obtain an image by executing the instructions or the program code of the final quality score calculation module 124. The at least one processor 130 may calculate a final quality score of the image, by inputting the quality score for each reference region and the importance for each reference region to the final quality calculation model 127.

In an embodiment, the operating method of the electronic apparatus 100 for evaluating the quality of an image may include a step S600 of evaluating quality of the image according to the calculated final quality score. In an embodiment, in the step S600 of evaluating quality of the image, the at least one processor 130 may obtain an image by executing the instructions or the program code of the final quality score calculation module 124. The at least one processor 130 may evaluate the quality of the image, by inputting the calculated final quality score to the image quality evaluation model.

FIG. 3 is a diagram for describing an operation of an electronic apparatus, according to an embodiment of the disclosure.

Referring to FIGS. 1, 2, and 3, in an embodiment, an image 300 obtained in the step S100 of obtaining an image may be an image whose quality is to be evaluated by the electronic apparatus 100. In an embodiment, although an object and a background are included in the image 300 illustrated in FIG. 3, the disclosure is not limited thereto. An image whose quality is to be evaluated by the electronic apparatus 100 may include only a background or only an object. Also, a plurality of objects may be included in the image 300.

In an embodiment, the image 300 may have a resolution including N horizontal pixels and M vertical pixels. In an embodiment, M and N may each be a natural number. In an embodiment, the image 300 may be a color image or a black-and-white image. Also, the image 300 may be an image corresponding to a single frame among a vide including a plurality of frames. In an embodiment, the electronic apparatus 100 and the operating method of the electronic apparatus 100 according to the disclosure may also be used to evaluate the quality of a video.

In an embodiment, in a revised-Swin transformer model 310 or a Swin transformer model, a patch including at least one pixel may be used as a unit area. In an embodiment, one patch may include 4 horizontal pixels and 4 vertical pixels. However, the disclosure is not limited thereto, and the number of pixels included in one patch is not limited thereto.

In an embodiment, in a process of extracting a one-dimensional (1D) feature tensor 320 from the image 300 by using the revised-Swin transformer model 310 or the Swin transformer model, the image 300 may be divided into a plurality of patches.

In an embodiment, the image 300 divided into the plurality of patches may have a resolution including P horizontal patches and Q vertical patches. In this case, P may be a value obtained by dividing M by a horizontal size of each patch. Q may be a value obtained by dividing N by a vertical size of each patch. In an embodiment, P and Q may each be a natural number.

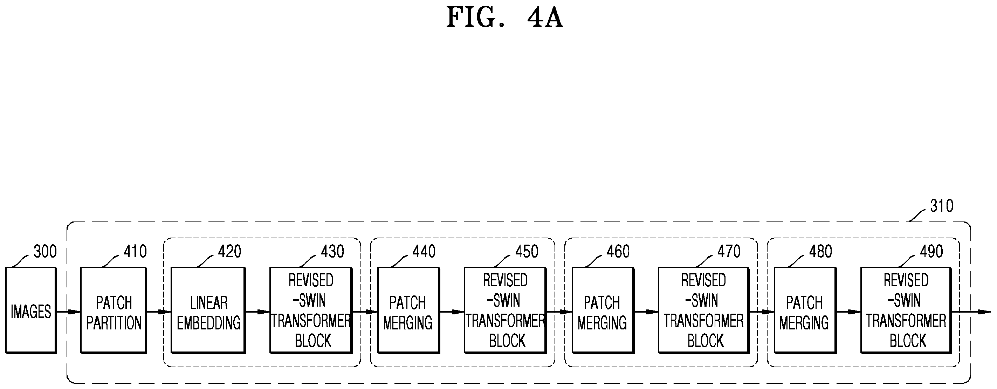

In an embodiment, in the step S200 of extracting a feature map based on the image, the 1D feature tensor 320 may be extracted from the image 300 input to the revised-Swin transformer model 310. In an embodiment, at least one processor 130 may extract the 1D feature tensor 320 by inputting the image 300 to the revised-Swin transformer model 310. The 1D feature tensor 320 may have one axis and a size of $\dfrac{P}{2^g} \times \dfrac{Q}{2^g} \times C$ along the one axis. In this case, $g$ may be the number of times patch merging is performed in the revised-Swin transformer model described below with reference to FIG. 4A. may denote the number of channels of the 1D feature tensor 320.

Although the revised-Swin transformer model 310 is illustrated in FIG. 3, the disclosure is not limited thereto, and the 1D feature tensor 320 may be extracted from the image 300 by using the Swin transformer model. In an embodiment, the revised-Swin transformer model 310 may include an AI model. In an embodiment, the AI model included in the revised-Swin transformer model 310 may include a machine learning model or a deep learning model. In an embodiment, the AI model included in the revised-Swing transformer model 310 may be an AI model that receives the image 300 as an input and is trained to infer the 1D tensor feature 320 by performing a transformer operation using self-attention based on a window, which is an area including at least one patch.

In an embodiment, in the step S200 of extracting a feature map based on the image, the at least one processor 130 may reshape the 1D feature tensor 320 extracted from the image 300 by the revised-Swin transformer model 310 into a three-dimensional (3D) feature tensor 330. In an embodiment, the at least one processor 130 may reshape the 1D feature tensor 320 into the 3D feature tensor 330, in order to calculate a quality score for each reference region and an importance for each reference region of the image described below. In an embodiment, the 3D feature tensor 330 may have three axes, and may have sizes of $\dfrac{P}{2^g}$, $\dfrac{Q}{2^g}$ and $C$ along the three axes. However, the disclosure is not limited thereto, and the 1D feature tensor 320 and the 3D feature tensor 330 may be extracted from the image 300 by using the Swin transformer model. Hereinafter, for convenience of explanation, the 3D feature tensor 330 may be referred to as a feature map 330.

In an embodiment, in the step S300 of calculating a quality score for each reference region of the image based on the feature map 330, a quality score for each reference region of the image may be calculated from the feature map 330 input to a region quality calculation model 340. In an embodiment, the term "quality score" may refer to a score calculated based on a resolution of pixels included in a reference region, a contrast ratio between adjacent pixels, a color, a structural similarity index, a peak signal-to-noise ratio, etc. However, the disclosure is not limited thereto, and a quality score may be set to increase the accuracy of a final evaluation score described below.

In an embodiment, the at least one processor 130 may calculate a quality score for each reference region of the image by inputting the feature map 330 to the region quality calculation model 340. In an embodiment, the calculated quality score for each reference region may be included in a quality score map 350. The at least one processor 130 may generate the quality score map 350 including a plurality of reference regions, by inputting the feature map 330 to the region quality calculation model 340. In an embodiment, the quality score for each reference region calculated by the region quality calculation model 340 may be included in each of the plurality of reference regions in the quality score map 350.

In an embodiment, the term "reference region" of an image may refer to a region corresponding to a unit area constituting the feature map 330. In an embodiment, the feature map 330 may be divided into a plurality of patches by the revised-Swin transformer model 310. Each of the plurality of patches may be a unit area constituting the feature map 330. In an embodiment, the term "reference region" of an image may refer to a region corresponding to each of a plurality of patches.

In an embodiment, when the quality score map 350 is divided into $\frac{P}{2^g}$ horizontal reference regions and $\frac{Q}{2^g}$ vertical reference regions, a quality score for each reference region included in each of the reference regions may be $u(i, j)$. In this case, j may be a natural number between 1 and $\frac{P}{2^g}$. i may be a natural number between 1 and $\frac{Q}{2^g}$. An operation of calculating a quality score for each reference region by using the region quality calculation model 340 and the quality feature map 350 will be described below with reference to FIG. 7.

In an embodiment, the region quality calculation model 340 may include an AI model. In an embodiment, the AI model included in the region quality calculation model 340 may include a machine learning model or a deep learning model. In an embodiment, the AI model included in the region quality calculation model 340 may be an AI model that receives the feature map 330 as an input and is trained to calculate a quality score for each reference region of the image and infer the quality score map 350.

In an embodiment, in the step S400 of calculating an importance for each reference region of the image based on the feature map 330, an importance for each reference region of the image may be calculated from the feature map 330 input to a region importance calculation model 360. In an embodiment, the term "importance" may refer to a degree of importance of a corresponding reference region in an image determined according to a preset criterion. In an embodiment, an importance of an object may be set to be greater than an importance of a background. In an embodiment, an importance of an object having a large area may be set to be greater than an importance of an object having a small area. In an embodiment, an importance of an area having a large gray scale may be set to be greater than an importance of an area having a small gray scale. However, the disclosure is not limited thereto, and an importance may be set to increase the accuracy of a final evaluation score described below.

In an embodiment, the at least one processor 130 may calculate an importance for each reference region of the image by inputting the feature map 330 to the region importance calculation model 360. In an embodiment, the calculated importance for each reference region may be included in an importance map 370. The at least one processor 130 may generate the importance map 370 including a plurality of reference regions, by inputting the feature map 330 to the region importance calculation model 360. In an embodiment, the importance for each reference region calculated by the region importance calculation model 360 may be included in each of the plurality of reference regions in the importance map 370.

In an embodiment, when the quality score map 350 is divided into $\frac{P}{2^g}$ horizontal reference regions and $\frac{Q}{2^g}$ vertical reference regions, a quality score for each reference region included in each of the reference regions may be $v(i,j)$. In this case, j may be a natural number between 1 and $\frac{P}{2^g}$. i may be a natural number between 1 and $\frac{Q}{2^g}$. An operation of calculating an importance for each reference region by using the region importance calculation model 360 and the importance map 370 will be described below with reference to FIG. 8.

In an embodiment, the region importance calculation model 360 may include an AI model. In an embodiment, the AI model included in the region importance calculation model 360 may include a machine learning model or a deep learning model. In an embodiment, the AI model included in the region importance calculation model 360 may be an AI model that receives the feature map 330 as an input and is trained to calculate an importance for each reference region of the image and infer the importance map 370.

In an embodiment, examples of the AI model included in the region quality calculation model 340 and the AI model included in the region importance calculation model 360 may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, a generative adversarial network (GAN), a conditional generative adversarial network (CGAN), a deep convolutional generative adversarial network (DCGAN), and a variational auto encoder (VAE), and the AI model included in the region quality calculation model 340 and the AI model included in the region importance calculation model 360 are not limited to the above examples.

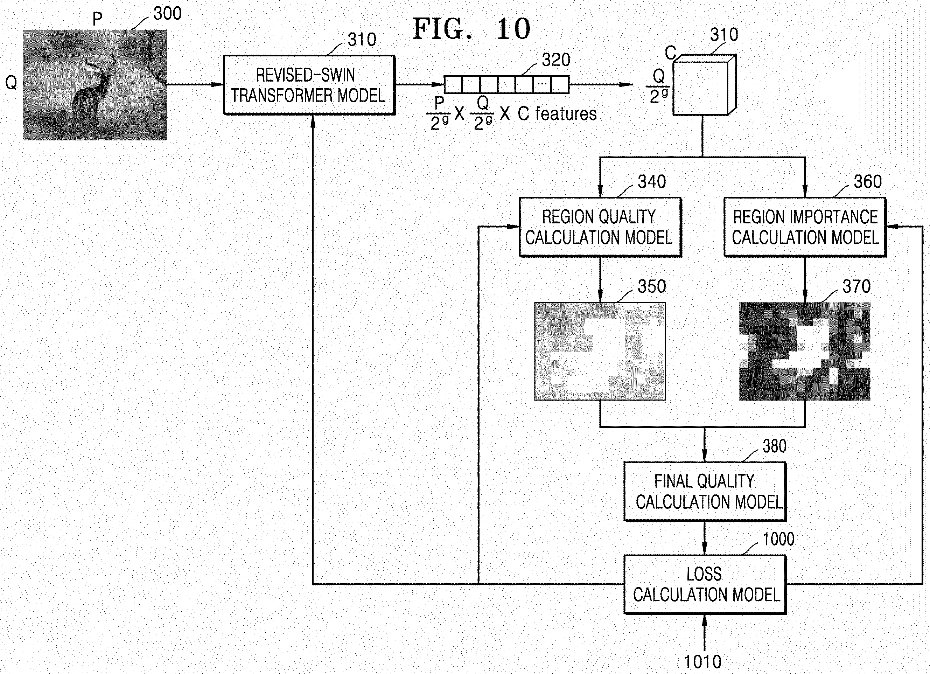

In an embodiment, the electronic apparatus 100 may train the AI model included in each of the revised-Swin transformer model 310, the region quality calculation model 340, and the region importance calculation model 360. In order to train the AI model included in each of the revised-Swin transformer model 310, the region quality calculation model 340, and the region importance calculation model 360, the electronic apparatus 100 may perform transfer learning using a pre-trained model. However, the disclosure is not limited thereto, and the electronic apparatus 100 may receive a trained AI model from an external server or peripheral electronic apparatuses through the communication interface 240. A method of training the AI model included in each of the revised-Swin transformer model 310, the region quality calculation model 340, and the region importance calculation model 360 will be described below with reference to FIG. 10.

In an embodiment, in the step S500 of calculating a final quality score based on the quality score and the importance, a final quality score of the image may be calculated from the quality score map 350 and the importance map 370 input to a final quality calculation model 380. In an embodiment, the at least one processor 130 may calculate a final quality score of the image by inputting the quality score map 350 and the importance map 370 to the final quality calculation model 380. In an embodiment, the final quality calculation model 380 may calculate a final quality score of the image based on the quality score for each reference region included in each of the plurality of reference regions of the quality score map 350 and the importance for each reference region included in each of the plurality of reference regions of the importance map 370. The final quality calculation model 380 may calculate a final quality score of the image based on the quality score for each reference region and the importance for each reference region by using Equation 1.

$$\text{Equation 1: } S = \sum_{i=1}^{\frac{Q}{2^g}} \sum_{j=1}^{\frac{P}{2^g}} u(i,j) \times v(i,j)$$

In this case, S is a final quality score of the image, $g$ is the number of times patch merging is performed in the revised-Swin transformer model or the Swin transformer model, P is a value obtained by dividing a horizontal resolution of the image by a horizontal size of one patch, Q is a value obtained by dividing a vertical resolution of the image by a vertical size of one patch, $u$ is the quality score for each reference region, and $v$ is the importance for each region.

In an embodiment, the at least one processor 130 may evaluate quality of the image based on the calculated final quality score. In an embodiment, the term "final quality score" may refer to a score calculated based on a resolution of an image, a contrast ratio of the image, a sharpness, a color, a structural similarity index, a peak signal-to-noise ratio, locations of an object and a background included in the image, a degree of distinction between the object and the background, etc. In an embodiment, the at least one processor 130 may evaluate that as the final quality score increases, the quality of the image increases. In an embodiment, when the final quality score is equal to or higher than a preset reference score, the at least one processor 130 may evaluate that the input image has a high quality suitable to be provided to a user or the quality of the converted image is high.

In an embodiment, the final quality score may be calculated based on the quality score calculated for each reference region of the image and the importance calculated for each reference region of the image.

In an embodiment, assuming that a final quality score is calculated through one step of calculating an average of an entire image, in the case that there is a large quality score deviation for each region included in the image or there is a large importance deviation for each region, the final quality score may not appropriately reflect a change in the quality of the image according to the above case Also, because training is performed based only on the final quality score calculated according to a training image in a process of training the AI model included in each of the revised-Swin transformer model 310, the region quality calculation model 340, and the region importance calculation model 360, overfitting for the training image may occur and performance during an inference step may be lowered.

In contrast, assuming that the final quality score is calculated based on the quality score calculated for each reference region of the image and the importance calculated for each reference region of the image according to the disclosure, in the case that there there is a large quality score deviation for each region included in the image or there is a large importance deviation for each region in the image, the final quality score may be calculated by reflecting a change in the quality of the image according to the above case. Also, in a process of training the AI included in each of the revised-Swin transformer model 310, the region quality calculation model 340, and the region importance calculation model 360 described below, because training may be performed based on information about the quality score calculated for reach reference region of the image and the importance calculated for each reference region of the image at a low level calculated according to a training image, overfitting may be prevented.

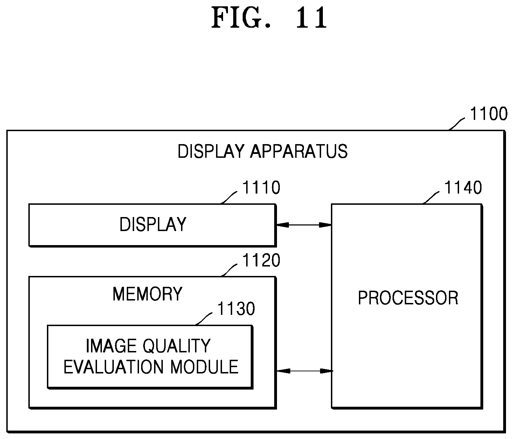

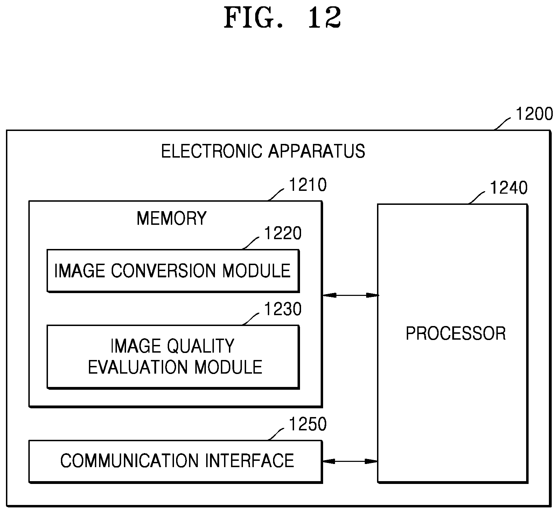

In an embodiment, the electronic apparatus 100 for evaluating the quality of an image and the operating method of the electronic apparatus 100 may be used to evaluate the quality of an image in a display apparatus that provides an image to a user or an electronic apparatus that performs image conversion. In an embodiment, when the final quality score is lower than the reference score, the at least one processor 130 may evaluate that the input image has a low quality that is unsuitable for the user or the quality of the converted image is low. Embodiments of using the electronic apparatus 100 for evaluating the quality of an image and the operating method of the electronic apparatus 100 will be described below with reference to FIGS. 11 and 12.

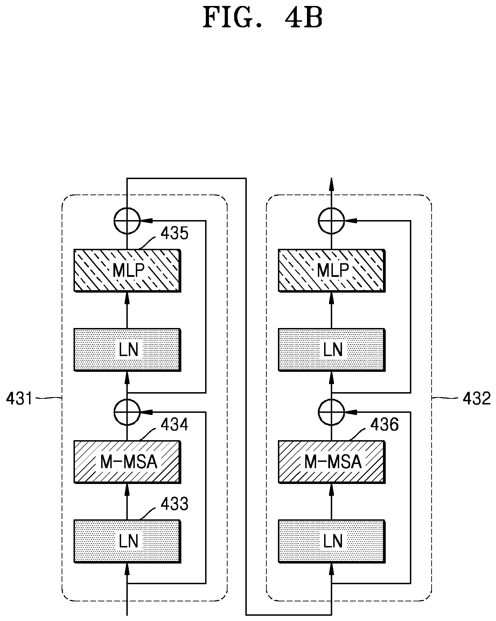

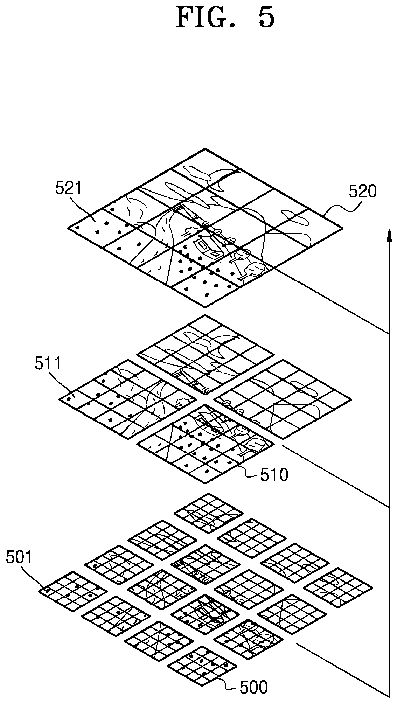

FIG. 4A is a diagram for describing an operation of extracting a feature map based on an image, according to an embodiment of the disclosure. FIG. 4B is a diagram for describing an operation of extracting a feature map based on an image, according to an embodiment of the disclosure. FIG. 5 is a diagram for describing a window used in a revised-Swin transformer model, according to an embodiment of the disclosure.

The same elements as those described with reference to FIG. 3 are denoted by the same reference numerals, and thus, a repeated description thereof will be omitted. Also, although the electronic apparatus 100 uses the revised-Swin transformer model 310 in FIGS. 4A to 5 for convenience of explanation, the electronic apparatus 100 may use the Swin transformer model.

Referring to FIGS. 3, 4A, and 5, in an embodiment, the image 300 input to the revised-Swin transformer model 310 may be partitioned (410) into a plurality of patches. In an embodiment, a plurality of pixels included in the image 300 may be partitioned (410) into a plurality of patches not overlapping each other.

In an embodiment, the revised-Swin transformer model 310 may include a plurality of revised-Swin transformer blocks (e.g., 430, 450, 470, and 490). In an embodiment, the image 300 input the revised-Swin transformer model 310 may sequentially pass through the plurality of revised-Swin transformer blocks (e.g., 430, 450, 470, and 490). In this case, the same operation may be performed on an input tensor in each of the plurality of revised-Swin transformer blocks (e.g., 430, 450, 470, and 490). In FIG. 4A, a first revised-Swin transformer block 430, a second revised-Swin transformer block 450, a third revised-Swin transformer block 470, and a fourth revised-Swin transformer block 490 are illustrated. However, the disclosure is not limited thereto, and the revised-Swin transformer model 310 may include more or fewer revised-Swin transformer blocks than four revised-Swin transformer blocks.

In an embodiment, linear embedding 420 may be performed on the partitioned patches. In an embodiment, a channel of a tensor including the partitioned patches may be converted through the linear embedding. In this case, the channel of the tensor converted through the linear embedding may vary according to a size of the revised-Swin transformer model 310.

Referring to FIGS. 4A, 4B, and 5, in an embodiment, an operation may be performed through the first revised-Swin transformer block 430 on the tensor on which the linear embedding has been performed. In an embodiment, the first revised-Swin transformer block 430 may include a first block 431 and a second block 432.

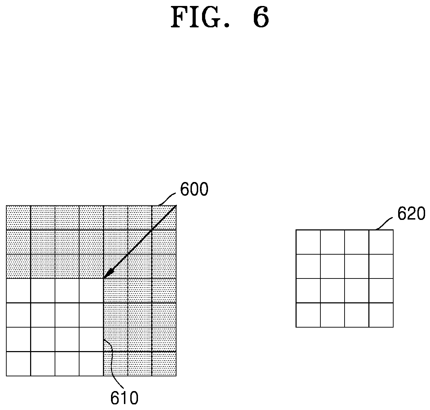

In an embodiment, layer normalization 433 may be performed on the tensor on which the linear embedding has been performed in the first block 431. In an embodiment, window multi-head self-attention (W-MSA) 434 may be performed on the tensor on which the layer normalization has been performed. Compared to multi-head self-attention (MSA) involving performing self-attention on the entire tensor in multiple heads, the W-MSA involves performing self-attention in units of windows 500, thereby reducing the complexity of calculation. The window 500 will be described below with reference to FIG. 6.

In an embodiment, the tensor on which the W-MSA 434 has been performed may undergo layer normalization and multi-layer perception (MLP) 435. The tensor that is fully connected through the MLP 435 may be provided to the second block 432. In an embodiment, an activation function in the MLP 435 may be a Gaussian error linear unit (GELU).

In an embodiment, in the second block 432, the tensor on which the layer normalization has been performed again may undergo shifted window multi-head self-attention (SW-MSA) 436. The SW-MSA may involve cyclically shifting the window 500 and performing W-MSA so that adjacent windows have connectivity. Accordingly, self-attention may be performed through the SW-MSA even on patches included in a boundary between adjacent windows. Thereafter, the cyclically shifted window may be returned through reverse cyclic shift.

In an embodiment, in the second block 432, the tensor on which the SW-MSA has been performed may undergo layer normalization and then may undergo MLP. In an embodiment, residual connection may be applied after a module for performing W-MSA and a module for performing MLP included in the first block 431. Residual connection may be applied after a module for performing SW-MSA and a module for performing MLP of the second block 432.

In an embodiment, the tensor on which an operation has been performed by the first revised-Swin transformer block 430, through the first block 431 and the second block 432, may be output.

Referring back to FIGS. 4A and 5, patch merging 440 may be performed on the plurality of patches included in the tensor passing through the first revised-Swin transformer block 430. In an embodiment, the patch merging 440 may refer to combining adjacent patches (e.g., 501) to generate a larger patch. In an embodiment, when a patch before merging is a first patch 501 and a path after merging is a second patch 511, the second patch 511 may be generated by combining a plurality of first patches. In an embodiment, the number of pixels included in the second patch 511 may be greater than the number of pixels included in the first patch 501. Horizontal and vertical sizes of the second patch 511 may be greater than horizontal and vertical sizes of the first patch 501.

In an embodiment, an operation may be performed through the second revised-Swin transformer block 450 on the tensor on which the patch merging 440 has been performed. In an embodiment, the operation of the second revised-Swin transformer block 450 may be performed in the same manner as the operation in the first revised-Swin transformer block 430.

In an embodiment, patch merging 460 may be performed on a plurality of second patches included in the tensor passing through the second revised-Swin transformer block 450. In an embodiment, when a patch obtained by merging the second patches 511 is referred to as a third patch 521, the third patch 521 may be generated by combining a plurality of second patches. In an embodiment, the number of pixels included in the third patch 521 may be greater than the number of pixels included in the second patch 511. Horizontal and vertical sizes of the third patch 521 may be greater than horizontal and vertical sizes of the second patch 511.

In an embodiment, an operation may be performed through the third revised-Swin transformer block 470 on the tensor on which the patch merging 440 has been performed. In an embodiment, the operation of the third revised-Swin transformer block 470 may be performed in the same manner as the operation in the first revised-Swin transformer block 430.

In an embodiment, patch merging 480 may be performed on a plurality of third patches included in the tensor passing through the third revised-Swin transformer block 470. In an embodiment, when a patch obtained by merging the third patches 521 is a fourth patch, the fourth patch may be generated by combining a plurality of second patches. In an embodiment, the number of pixels included in the fourth patch may be greater than the number of pixels included in the third patch 521. Horizontal and vertical sizes of the fourth patch may be greater than horizontal and vertical sizes of the third patch 521.

In an embodiment, an operation may be performed through the fourth revised-Swin transformer block 490 on the tensor on which the patch merging 480 has been performed. In an embodiment, the operation of the fourth revised-Swin transformer block 490 may be performed in the same manner as the operation in the first revised-Swin transformer block 430.

In an embodiment, the 1D feature tensor 320 may be extracted from the input image 300, through the first to fourth revised-Swin transformer blocks 430. In an embodiment, because patch merging is performed and then an operation is performed through each of revised-Swin transformer blocks, the 1D feature tensor 320 may be extracted through the revised-Swin transformer model 310 having a hierarchical structure.

FIG. 6 is a diagram for describing a window used in a revised-Swin transformer model, according to an embodiment of the disclosure.

Referring to FIGS. 4A and 6, in an embodiment, a revised-Swin transformer model may be a model obtained by revising a Swin transformer model so that a feature map is extracted by a window 620 of the same resolution, regardless of a resolution of the input image 300.

In an embodiment, the revised-Swin transformer model may be a model for performing a Swin transformer operation by using the window 620 having a resolution less than a resolution of a window 600 used in the Swin transformer model. Hereinafter, an operation of the Swin transformer model will be described with reference to FIGS. 4A to 5, and a difference from the revised-Swin transformer model will be described.

Referring to FIGS. 4A, 4B, 5, and 6, in an embodiment, self-attention may be performed in units of windows in the revised-Swin transformer model 310. In an embodiment, a window is a region where a plurality of patches are separated and may include at least one patch. In an embodiment, a window may have a resolution including a horizontal patches and b vertical patches. In an embodiment, a window may have a resolution including 7 horizontal patches and 7 vertical patches.

In an embodiment, windows used in the first to fourth revised-Swin transformer blocks 430, 450, 470, and 490 may have the same resolution. In an embodiment, a window used in the first revised-Swin transformer block 430 may be referred to as a first window 500, a window used in the second revised-Swin transformer block 450 may be referred to as a second window 510, a window used in the third revised-Swin transformer block 470 may be referred to as a third window 520, and a window used in the fourth revised-Swin transformer block 490 may be referred to as a fourth window. In an embodiment, the first window 500, the second window 510, the third window 520, and the fourth window may have the same resolution.

In an embodiment, as patch merging is performed after an operation is performed through each of the first to third revised-Swin transformer blocks 430, 450, and 470, a size of each patch constituting an image may increase and a resolution of the image including the patch may decrease.

In this case, a resolution of the image including the patch while an operation is performed in the revised-Swin transformer model 310 may be determined according to a resolution of the image 300 input to the revised-Swin transformer model 310.

In an embodiment, one patch may include 4 horizontal pixels and 4 vertical pixels, and during patch merging, four adjacent patches may be merged into one patch. In this case, when the image 300 having a resolution including 128 horizontal pixels and 128 vertical pixels is input, the image in the first revised-Swin transformer block 430 may have a resolution of 32 horizontal patches and 32 vertical patches. The image in the second revised-Swin transformer block 450 may have a resolution of 16 horizontal patches and 16 vertical patches. The image in the third revised-Swin transformer block 470 may have a resolution of 8 horizontal patches and 8 vertical patches. The image in the fourth revised-Swin transformer block 490 may have a resolution of 4 horizontal patches and 4 vertical patches.

In an embodiment, when the image 300 having a resolution of 224 horizontal pixels and 224 vertical pixels is input, the image in the first revised-Swin transformer block 430 may have a resolution of 56 horizontal patches and 56 vertical patches. The image in the second revised-Swin transformer block 450 may have a resolution of 28 horizontal patches and 28 vertical patches. The image in the third revised-Swin transformer block 470 may have a resolution of 14 horizontal patches and 14 vertical patches. The image in the fourth revised-Swin transformer block 490 may have a resolution of 7 horizontal patches and 7 vertical patches.

In an embodiment, the window 600 used in the Swin transformer model may have a resolution of 7 horizontal patches and 7 vertical patches. In an embodiment, the Swin transformer model may be a model trained to perform self-attention by using a window having a resolution of 7 horizontal patches and 7 vertical patches in each Swin transformer block in which patch merging is performed.

In an embodiment, when an image having a resolution of 224 horizontal pixels and 224 vertical pixels is input to the revised-Swin transformer model 310 and the window 600 used in the conventional Swin transformer model is used, because the image in the fourth revised-Swin transformer block 490 having a largest patch size has a resolution of 7 horizontal patches and 7 vertical patches through patch merging, the entire image may be included in one window. Accordingly, self-attention may be performed in 7 horizontal patches and 7 vertical patches included in one window, and a 1D feature tensor may be inferred based on a weight of a trained model.

However, when an image having a resolution of 128 horizontal pixels and 128 vertical pixels is input to the revised-Swin transformer model 310, because the image in the fourth revised-Swin transformer block 490 has a resolution of 4 horizontal patches and 4 vertical patches, self-attention is performed in 4 horizontal patches and 4 vertical patches in one window. In this case, because self-attention is performed by using a window 610 having a resolution of 4 horizontal patches and 4 vertical patches unlike the trained model, an unintended 1D feature tensor may be inferred.

To prevent this, in the case of the Swin transformer model, an input image may be resized or cropped to have a resolution corresponding to a resolution of an image input as training data during training.

The revised-Swin transformer model 310 of the disclosure may be a model trained to perform self-attention by using a window having a resolution of 4 horizontal patches and 4 vertical patches in each revised-Swin transformer block in which patch merging is performed. In this case, even when not only an image having a resolution of 224 horizontal pixels and 224 vertical pixels but also an image having a resolution of 128 horizontal pixels and 128 vertical pixels are input to the revised-Swin transformer model 310, self-attention may be performed by using the window 620 having a resolution of 4 horizontal patches and 4 vertical patches, like the trained model, to infer a 1D feature tensor. Accordingly, in the case of the revised-Swin transformer model 310, an image having any of various resolutions may be provided as an input without having to resize or crop the input image to have a resolution corresponding to a resolution of an image input as training data during training.

In an embodiment, although the Swin transformer model performs self-attention by using a window having a resolution of 7 horizontal patches and 7 vertical patches and the revised-Swin transformer model performs self-attention by using a window having a resolution of 4 horizontal patches and 4 vertical patches, the disclosure is not limited thereto. The revised-Swin transformer model may be a model trained by using the window 620 having a sufficiently low resolution so that a feature map is extracted by the window 620 having the same resolution, regardless of a resolution of the input image 300. In this case, the sufficiently low resolution may be determined according to the purpose of use of the electronic apparatus 100, the target of use, etc. A resolution of a window may be determined based on a resolution of an image that is pre-predicted to be input to the electronic apparatus 100, the number of revised-Swin transformer blocks included in the revised-Swin transformer model, the number of times patch merging is performed, a patch size during patch partition, etc.

The electronic apparatus 100 of the disclosure may use a 1D feature tensor extracted by using the Swin transformer model or the 1D feature tensor 320 extracted by using the revised-Swin transformer model 310. For convenience of explanation, the following will be described assuming that the 1D feature tensor 320 is extracted by using the revised-Swin transformer model 310.

FIG. 7 is a diagram for describing an operation of calculating a quality score for each reference region, according to an embodiment of the disclosure. The same elements as those in FIG. 3 are denoted by the same reference numerals, and thus, a repeated description thereof will be omitted.

Referring to FIGS. 1, 3, and 7, a convolution operation may be performed in a first convolution layer 341 on the feature map 330 input to the region quality calculation model 340. In an embodiment, a convolution operation may be performed on the feature map 330 by using a first filter in the first convolution layer 341. A resolution of the first filter may correspond to each of a plurality of reference regions included in the image 300. A resolution of the first filter may correspond to each of a plurality of patches included in the feature map 330. In an embodiment, a size of the first filter may correspond to a size of each of the plurality of patches included in the feature map 330. A convolution operation may be performed on each of the plurality of patches included in the feature map 330 by using the first filter in the first convolution layer 341.

In an embodiment, the first filter may be a filter for extracting a feature indicating the quality of the image 300 through a convolution operation from the feature map 330. In an embodiment, a weight included in the first filter may be a weight trained to extract a feature indicating the quality of the image 300 through a convolution operation from the feature map 330. A weight included in the first filter may be a value updated according to a loss function based on a ground truth score obtained by evaluating the image 300 described below and a final quality score of the image 300 calculated through the electronic apparatus 100.

In an embodiment, as a convolution operation is performed by using the first filter having a resolution corresponding to each of the plurality of reference regions included in the image 300, a feature indicating the quality of each of the plurality of reference regions of the image 300 may be extracted. In an embodiment, the plurality of reference regions may respectively correspond to a plurality of patches divided in the revised-Swin transformer model 310. As a convolution operation is performed by using the first filter in the region quality calculation module 340, a feature indicating the quality corresponding to each of the plurality of patches may be extracted.

In an embodiment, a convolution operation may be performed in the first convolution layer 341 so that the extracted feature has one channel. Accordingly, the feature map 330 having channels may be extracted as a feature map having one channel.

In an embodiment, in the region quality calculation model 340, an activation operation is performed in a first activation layer 342 on a tensor extracted by performing a convolution operation through the first convolution layer 341. In an embodiment, an activation operation using, for example, but not limited to, a Sigmoid function, a Sigmoid function and a linear normalization function, or a rectified linear unit (ReLU) function and a linear normalization function or a softmax normalization function may be performed in the first activation layer 342.

In an embodiment, the feature map 330 input to the region quality calculation model 340 may be extracted as the quality score map 350 through the first convolution layer 341 and the first activation layer 342. In an embodiment, at least one processor 130 may input the feature map 330 to the region quality calculation model 340 and may generate the quality score map 350 through the first convolution layer 341 and the first activation layer 342. In an embodiment, the quality score map 350 may be divided into a plurality of reference regions, and a quality score of the image 300 may be included in each of the plurality of reference regions.

FIG. 8 is a diagram for describing an operation of calculating an importance for each reference region, according to an embodiment of the disclosure. FIG. 9 is a diagram for describing a filter used in an operation of calculating an importance for each reference region, according to an embodiment of the disclosure. The same elements as those in FIG. 3 are denoted by the same reference numerals, and thus, a repeated description thereof will be omitted.

Referring to FIGS. 1, 3, and 8, a convolution operation may be performed in a second convolution layer 361 on the feature map 330 input to the region importance calculation model 360. In an embodiment, the second convolution layer 361 may include a plurality of sub-convolution layers. A convolution operation may be performed in a first sub-convolution layer 362, a second sub-convolution layer 363, and a third sub-convolution layer 364 on the feature map 330 input to the region importance calculation model 360.

In an embodiment, a convolution operation may be performed on the feature map 330 by using a second filter in the second convolution layer 361. In an embodiment, a resolution of the second filter may correspond to two or more of a plurality of reference regions included in the image 300. A resolution of the second filter may correspond to two or more of a plurality of patches included in the feature map 330. A size of the second filter may correspond to a size of two or more of the plurality of patches included in the feature map 330. A convolution operation may be performed on two or more of the plurality of patches included in the feature map 300 by using the second filter in the second convolution layer 361.

In an embodiment, the second filter may be a filter for extracting a feature indicating an importance for each reference region of the image 300, through a convolution operation from the feature map 330. In an embodiment, a weight included in the second filter may be a weight trained to extract a feature indicating an importance for each reference region of the image 300 through a convolution operation from the feature map 330. A weight included in the second filter may be a value updated according to a loss function based on a ground truth score obtained by evaluating the image 300 described below and a final quality score of the image 300 calculated through the electronic apparatus 100.

In an embodiment, a convolution operation may be performed on the feature map 330 by using a first sub-filter in the first sub-convolution layer 362. A convolution operation may be performed on the feature map 330 by using a second sub-filter in the second sub-convolution layer 363. A convolution operation may be performed on the feature map 330 by using a third sub-filter in the third sub-convolution layer 364. In an embodiment, a weight included in each of the first sub-filter, the second sub-filter, and the third sub-filter may be a value updated according to a loss function based on a ground truth score obtained by evaluating the image 300 and a final quality score of the image 300 calculated through the electronic apparatus 100.

In an embodiment, as a convolution operation is performed by using the second filter having a resolution corresponding to two or more of the plurality of reference regions included in the image 300, a feature indicating an importance between the two or more reference regions corresponding to the second filter may be extracted. As a convolution operation is performed on the feature map 330 by using the second filter having a resolution corresponding to two or more reference regions, an importance of each reference region may be extracted from a relationship with other reference regions.

In an embodiment, the first sub-filter, the second sub-filter, and the third sub-filter may each be a filter for performing dilated convolution. In an embodiment, dilation rates of the first sub-filter, the second sub-filter, and the third sub-filter may be different from each other. In an embodiment, the term "dilation rate" may refer to an interval between reference regions having a weight included in each sub-filter. In an embodiment, a dilation rate of the second sub-filter may be greater than a dilation rate of the first sub-filter. A dilation rate of the third sub-filter may be greater than a dilation rate of the second sub-filter. In an embodiment, a dilation rate of the first sub-filter may be 4. A dilation rate of the second sub-filter may be 8. A dilation rate of the third sub-filter may be 16.

In an embodiment, referring to FIGS. 8 and 9, as dilation rates of the first to third sub-filters are different from each other, sizes of receptive fields of the first to third sub-filters may be different from each other. In an embodiment, an receptive field 910 of a filter 910 having a resolution of 3 horizontal patches and 3 vertical patches and a dilation rate of 3 for the feature map 330 may be wider than an receptive field 900 of a filter 901 having a resolution of 3 horizontal patches and 3 vertical patches and a dilation rate of 1 for the feature map 330.

In an embodiment, a receptive field of the second sub-filter may be wider than a receptive field of the first sub-filter. A receptive field of the second sub-filter may be wider than a receptive field of the first sub-filter. A receptive field of the third sub-filter may be wider than a receptive field of the second sub-filter.

In an embodiment, as a convolution operation is performed by using sub-filters having different receptive fields, an importance for each reference region considering adjacent reference regions from among the plurality of reference regions included in the image 330 and an importance for each reference region considering reference regions spaced apart from each other from among the plurality of reference regions may be extracted. In an embodiment, when the image 330 includes an object and a background, an importance for each reference region in the object and an importance for each reference region in the background may be extracted by performing a convolution operation by using a sub-filter having a small receptive field. Also, an importance for each reference region in an area including the background and the object may be extracted by performing a convolution operation by using a sub-filter having a wide receptive field.

In an embodiment, a convolution operation may be performed in the second convolution layer 361 so that the extracted feature has 1024 channels. Accordingly, the feature map 330 having $C$ channels may be extracted as a feature map having 1024 channels. In an embodiment, a convolution operation may be performed in the first sub-convolution layer 362 so that the extracted feature has 1024 channels. A convolution operation may be performed in the second sub-convolution layer 363 so that the extracted feature has 1024 channels. A convolution operation may be performed in the third sub-convolution layer 364 so that the extracted feature has 1024 channels.

In an embodiment, a concatenation operation may be performed in a connection layer 365 on tensors extracted through the first sub-convolution layer 362, the second sub-convolution layer 363, and the third sub-convolution layer 364.

In an embodiment, a convolution operation may be performed by using a third filter in a third convolution layer 366 on the tensors connected through the connection layer 365. A resolution of the third filter may correspond to each of the plurality of reference regions included in the image 300. A resolution of the third filter may correspond to each of a plurality of patches included in the tensor on which a concatenation operation has been performed. In an embodiment, a size of the third filter may correspond to a size of each of the plurality of patches included in the feature map 330. A convolution operation may be performed on each of the plurality of patches included in the tensor on which a concatenation operation has been performed by using the third filter in the third convolution layer 366.

In an embodiment, a convolution operation may be performed in the third convolution layer 366 so that the extracted feature has one channel. Accordingly, the feature map 330 having 3072 channels may be extracted as a feature map having one channel.

In an embodiment, in the region importance calculation model 360, an activation operation may be performed in a second activation layer 367 on the tensor extracted by performing a convolution operation through the third convolution layer 367. In an embodiment, an activation operation using, for example, but not limited to, a Sigmoid function, a Sigmoid function and a linear normalization function, or a ReLU function and a linear normalization function or a softmax normalization function may be performed in the second activation layer 367.

In an embodiment, the feature map 330 input to the region importance calculation model 360 may be extracted as the importance map 370 through the second convolution layer 361, the connection layer 365, the third convolution layer 366, and the second activation layer 367. In an embodiment, at least one processor 130 may input the feature map 330 to the region importance calculation model 360 and may generate the importance map 370 through the second convolution layer 361, the connection layer 365, the third convolution layer 366, and the second activation layer 367. In an embodiment, the importance map 370 may be divided into a plurality of reference regions, and an importance of the image 300 may be included in each of the plurality of reference regions.

FIG. 10 is a diagram for describing a method of training a model used in an operating method of an electronic apparatus for evaluating the quality of an image, according to an embodiment of the disclosure. The same elements as those in FIG. 3 are denoted by the same reference numerals, and thus, a repeated description thereof will be omitted.

Referring to FIGS. 3 and 10, in an embodiment, an AI model included in the revised-Swin transformer model 310 may be a model trained so that the 1D tensor feature 320 is inferred by a loss calculation model 1000 from the image 300. In an embodiment, an AI model included in the region quality calculation model 340 may be a model trained so that a quality score for each reference region is calculated by the loss calculation model 1000 from the feature map 330 to infer the quality score map 350. In an embodiment, an AI model included in the region importance calculation model 360 may be a model trained so that an importance for each reference region is calculated by the loss calculation model 1000 from the feature map 330 to infer the importance map 370.

In an embodiment, a weight of the AI model included in each of the revised-Swin transformer model 310, the region quality calculation model 340, and the region importance calculation model 360 may be updated by using a loss function based on a ground truth score 1010 pre-evaluated for the input image 300 and a final quality score calculated in the final quality calculation model 380. In this case, the pre-evaluated ground truth score 1010 may be a score obtained when image quality evaluation experts evaluate the quality of the input image 300 for training of the electronic apparatus 100 or may be a score obtained when the quality of the input image 300 is evaluated by using a pre-used evaluation method.

In an embodiment, a loss function used in the loss calculation model 1000 is as shown in Equation 2 and Equation 3 below.

$$\text{Loss} = \frac{1}{B} \sum_{i=1}^{B} (\tilde{x}_i - y_i)^2$$

Equation 2: Loss=

$$\tilde{x}_i = \frac{(x_i - \alpha \bar{x})}{\alpha \hat{x} + (1 - \alpha)} \times (\alpha \hat{y} + 1 - \alpha) + \alpha \bar{y}$$

Equation 3:

In this case, x may be a final quality score calculated in the final quality calculation model 380, *y* may be a pre-evaluated ground truth score, LOSS may be a loss function, *B* may be the number of pieces of data included in a mini-batch where training is performed, $\bar{x}$ may be an average value of the final quality score, *y* may be an average value of the ground truth score, $\hat{x}$ may be a standard deviation value of the final quality score, $\hat{y}$ may be a standard deviation value of the ground truth score, and $\alpha$ may be a regularization coefficient and may be a value between 0 and 1.

In an embodiment, as the loss calculation model 1000 uses the loss function using Equation 2 and 3, unnecessary training may be prevented in improving the accuracy and performance of image quality evaluation.

In an embodiment, the accuracy and performance of image quality evaluation may be determined based on an indicator such as a Pearson's linear correlation coefficient (PLCC) or a Spearman's rank order correlation coefficient (SRCC) In an embodiment, the electronic apparatus 100 of the disclosure may be trained to calculate and infer a final quality score by evaluating the quality of the input image 100, based on an evaluation indicator such as a PLCC or an SRCC.

In this case, when the AI model included in each of the revised Sin transformer model 310, the region quality calculation model 340, and the region importance calculation model 360 is trained with a conventional loss function simply according to a difference between a final quality score and a ground truth score, unnecessary training may be repeated to reduce a difference between an average or a standard deviation of the ground truth value and an average or a standard deviation of the final quality score, regardless of improving performance according to an evaluation indicator such as an PLCC or an SRCC.

In an embodiment, as the electronic apparatus 100 of the disclosure uses the loss function using Equation 2 and Equation 3, unnecessary training for reducing a difference between an average or a standard deviation of a ground truth and an average or a standard deviation of a final quality score may be prevented from being repeated. Accordingly, a time required to train the AI model included in each of the revised-Swin transformer model 310, the region quality calculation model 340, and the region importance calculation model 360 may be reduced.

Also, an operation of training the AI model included in each of the revised-Swin transformer model 310, the region quality calculation model 340, and the region importance calculation model 360 may be stabilized by including $\alpha$, which is the regularization coefficient, in the loss function. In an embodiment, $\alpha$ may be set to a value close to 1 and used.

In an embodiment, a weight of the AI model included in each of the revised-Swin transformer model 310, the region quality calculation model 340, and the region importance calculation model 360 may be updated to minimize the loss function. The electronic apparatus 100 may update a weight of the AI model included in each of the revised-Swin transformer model 310, the region quality calculation model 340, and the region importance calculation model 360 to minimize the loss function, by using a forward propagation algorithm and a back propagation algorithm.

FIG. 11 is a diagram for describing a display apparatus using an image quality evaluation method, according to an embodiment of the disclosure.

Referring to FIGS. 1 and 11, in an embodiment, a display apparatus 1100 may be implemented as any of various types of display apparatuses such as a television, a digital signage, a projector, a mobile device, a smartphone, a laptop computer, a desktop computer, a tablet PC, or a wearable device.

In an embodiment, the display apparatus 1100 may include a display 1110, a memory 1120, and at least one processor 1140. However, not all of the components of the display apparatus 1100 shown in FIG. 11 are essential components. The display apparatus 1100 may include more or fewer components than those shown in FIG. 10.

In an embodiment, the display 1110, the memory 1120, and the at least one processor 1140 may be electrically and/or physically connected to each other.

In an embodiment, the display 1110 may include any one of a liquid crystal display, a plasma display, an organic light-emitting diode display, and an inorganic light-emitting diode display. However, the disclosure is not limited thereto, and the display 1110 may include another type of display capable of providing an image to a user using the display apparatus 1100.

In an embodiment, an image evaluation module 1130 for evaluating the quality of an image may be stored in the memory 1120. In an embodiment, the image quality evaluation module 1130 may be a module described with reference to FIGS. 1 to 10. However, not all of the components shown in FIG. 10 are essential components. The memory 1120 may store more or fewer modules than those shown in FIG. 10. In an embodiment, a module for changing a resolution of an image or changing a size of an image may be stored in the memory 1120. The image quality evaluation module 1130 may be used to evaluate the quality of an image whose resolution is changed or whose size is changed.

In an embodiment, the at least one processor 140 may control an operation of a display apparatus 2000. The at least one processor 1440 may evaluate the quality of an image used in the display apparatus 1100, by executing instructions or program code of the image quality evaluation module 1130.

In an embodiment, before an image received from an external server or an electronic apparatus is displayed on the display 1110, the at least one processor 140 may evaluate the quality of the received image by using the image quality evaluation module 1130. When it is determined that the evaluated image has an appropriate quality to be provided to a user using the display apparatus 1100, the at least one processor 1140 may provide the image to the user through the display 1110.

In an embodiment, when it is determined that the image does not have an appropriate quality to be provided to the user using the display apparatus 1100, the at least one processor 1140 may provide the image to the user along with a notification indicating that the quality of the provided image is not appropriate (e.g., 'the quality of the image is poor' or 'a low-resolution image is displayed'). Also, the at least one processor 1140 may improve the quality of the provided image by using a module for improving the quality of an image such as up-scaling using interpolation or the like and then may provide the image to the user.

FIG. 12 is a diagram for describing an electronic apparatus using an image quality evaluation method, according to an embodiment of the disclosure.

Referring to FIGS. 1 and 12, in an embodiment, an electronic apparatus 1200 may be an electronic apparatus for converting and outputting a received image such as improving the quality of the image or increasing the size of the image.

In an embodiment, the electronic apparatus 1200 of FIG. 12 may be an electronic apparatus including, but not limited to, a set-top box or image editing software. In an embodiment, the electronic apparatus 1200 of FIG. 12 may convert the quality, size, and shape of an image received from an external server or an electronic apparatus and may output the image back to the external server or the other electronic apparatus.

In an embodiment, the electronic apparatus 1200 may include a memory 1210, at least one processor 1240, and a communication interface 1250. However, not all of the components of the electronic apparatus 1200 shown in FIG. 12 are essential components. The electronic apparatus 1200 may include more or fewer components than those shown in FIG. 12. In an embodiment, the memory 1210, the at least one processor 1240, and the communication interface 1250 may be electrically and/or physically connected to each other.

In an embodiment, an image conversion module 1220 for converting the quality, size, and shape of an image and an image evaluation module 1230 for evaluating the quality of an image may be stored in the memory 1210. In an embodiment, the image quality evaluation module 1230 may be a module described with reference to FIGS. 1 to 10. However, not all of the modules shown in FIG. 12 are essential modules. The memory 1210 may include more or fewer modules than those shown in FIG. 12. In an embodiment, an image generation module may be further included in the memory 1210, and the image quality evaluation module 1230 may be used to evaluate the quality of an image generated through the image generation module.

In an embodiment, the at least one processor 1240 may control an operation of the electronic apparatus 1200. The at least one processor 1240 may convert the quality, size, and shape of a received image, by executing instructions or program code of the image conversion module 1220.

The at least one processor 1240 may evaluate the quality of an image provided from the electronic apparatus 1200, by executing instructions or program code of the image quality evaluation module 1230.

In an embodiment, the at least one processor 1140 may convert the quality, size, and shape of an image received from an external server or an electronic apparatus through the communication interface 1250 by using the image conversion module 1220 and may evaluate the quality of the converted image by using the image quality evaluation module 1130. When it is determined that the converted image has an appropriate quality compared to a pre-set determination criterion, the at least one processor 1140 may provide the converted image to the external server or the other electronic apparatus through the communication interface 1250.

When it is determined that the converted image has an inappropriate quality compared to a preset determination criterion, the at least one processor 1140 may convert the quality, size, and shape of the converted image again by using the image conversion module 1220 or may provide information indicating that the image received from the external server or the other electronic apparatus has an inappropriate quality. Also, the at least one processor 1140 may provide the converted image along with information indicating that the converted image has an inappropriate quality to the external server or the other electronic apparatus.

To solve the above technical problems, in an embodiment, an electronic apparatus for evaluating quality of an image may be included. The electronic apparatus may include a memory in which at least one instruction is stored, and at least one processor configured to execute the at least one instruction stored in the memory. The at least one processor may be configured to obtain an image, by executing the at least one instruction. The at least one processor may be configured to extract a feature map including a feature of the image based on the image, by executing the at least one instruction. The at least one processor may be configured to calculate a quality score for each reference region of the image, based on the extracted feature map, by executing the at least one instruction. The at least one processor may be configured to calculate an importance for each reference region of the image, based on the extracted feature map, by executing the at least one instruction. The at least one processor may be configured to evaluate the quality of the image according to a final quality score of the image calculated based on the quality score for each reference region and the importance for each reference region, by executing the at least one instruction.

In an embodiment, the at least one processor may be further configured to extract the feature map by inputting the image to a shifted window (Swin) transformer model, by executing the at least one instruction.

In an embodiment, the at least one processor may be further configured to extract the feature map by inputting the image to a revised-shifted window (Swin) transformer model, by executing the at least one instruction. The revised-Swin transformer model may be a model obtained by revising a Swin transformer model so that the feature map is extracted by a window having a same size regardless of a size of the image.

In an embodiment, a size of a window used in the revised-Swin transformer model may be less than a size of a window used in the Swin transformer model.

In an embodiment, each reference region may be a region corresponding to a unit area constituting the feature map.

In an embodiment, the image may be divided into a plurality of reference regions. The at least one processor may be further configured to calculate the quality score for each reference region by performing a convolution operation by using a first filter on the extracted feature map by executing the at least one instruction.

In an embodiment, a size of the first filter may correspond to each of the plurality of reference regions.

In an embodiment, the image may be divided into a plurality of reference regions. The at least one processor may be further configured to calculate the importance for each reference region by performing a convolution operation by using a second filter on the extracted feature map, by executing the at least one instruction.

In an embodiment, a size of the second filter may correspond to two or more of the plurality of reference regions.

In an embodiment, a size of the second filter may correspond to two or more reference regions spaced apart from each other from among the plurality of reference regions.

To solve the above technical problems, in an embodiment, there is provided an operating method of an electronic apparatus for evaluating quality of an image. The operating method of the electronic apparatus may include a step of obtaining the image. The operating method of the electronic apparatus may include a step of extracting a feature map including a feature of the image based on the image. The operating method of the electronic apparatus may include a step of calculating a quality score for each reference region of the image, based on the extracted feature map. The operating method of the electronic apparatus may include a step of calculating an importance for each reference region of the image, based on the extracted feature map. The operating method of the electronic apparatus may include a step of evaluating the quality of the image according to a final quality score of the image calculated based on the quality score for each reference region and the importance for each reference region.

In an embodiment, the step of extracting the feature map may include extracting the feature map by inputting the image to a shifted window (Swin) transformer model.

In an embodiment, the step of extracting the feature map may include extracting the feature map by inputting the image to a revised-shifted window (Swin) transformer model. The revised-Swin transformer model may be a model obtained by revising a Swin transformer model so that the feature map is extracted by a window having a same size regardless of a size of the image.

In an embodiment, the image may be divided into a plurality of reference regions. The step of calculating the quality score for each reference region may include calculating the quality score for each reference region by performing a convolution operation by using a first filter on the extracted feature map.

In an embodiment, a size of the first filter may correspond to each of the plurality of reference regions.

In an embodiment, the step of calculating the importance for each reference region may include calculating the importance for each reference region by performing a convolution operation by using a second filter on the extracted feature map.

According to an embodiment of the disclosure, there may be provided a computer-readable recording medium having recorded thereon a program for performing at least one of embodiments of the operating method on a computer.

A program executed by an electronic apparatus described in the disclosure may be implemented as a hardware component, a software component, and/or a combination of a hardware component and a software component. The program may be executed by any system capable of executing computer-readable instructions.

The software may include a computer program, code, instructions, or a combination of one or more thereof, and may configure a processing device to operate as desired or instruct the processing device independently or collectively.

The software may be implemented as a computer program including instructions stored in a computer-readable storage medium. Examples of the computer-readable recording medium include a magnetic storage medium (e.g., a read-only memory (ROM), a random-access memory (RAM), a floppy disk, or a hard disk) and an optical recording medium (e.g., a compact disc ROM (CD-ROM), or a digital versatile disc (DVD)). The computer-readable recording medium may be distributed in computer systems connected in a network so that computer-readable code is stored and executed in a distributed fashion. The recording medium may be computer-readable, may be stored in a memory, and may be executed by a processor.

The computer-readable storage medium may be provided in the form of a non-transitory storage medium. Here, 'non-transitory' means that the storage medium does not include a signal (e.g., an electromagnetic wave) and is tangible, but does not distinguish whether data is stored semi-permanently or temporarily in the storage medium. For example, the 'non-transitory storage medium' may include a buffer in which data is temporarily stored.

Also, a program according to embodiments of the disclosure may be provided in a computer program product. The computer program product is a product purchasable between a seller and a purchaser.

The computer program product may include a software program and a computer-readable storage medium in which the software program is stored. For example, the computer program product may include a product (e.g., a downloadable application) that is electronically distributed as a software program through an electronic market (e.g., Samsung Galaxy Store) or a manufacturer of an electronic apparatus. For electronic distribution, at least a part of the software program may be stored in a storage medium or may be temporarily generated. In this case, the storage medium may be a storage medium of a server of the manufacturer of the electronic apparatus, a server of the electronic market, or a relay server that temporarily stores the software program.

Although the embodiments have been described by the limited embodiments and the drawings as described above, various modifications and variations are possible by one of ordinary skill in the art from the above description. For example, the described techniques may be performed in a different order from the described method, and/or the described elements such as a computer system and a module may be combined or integrated in a different form from the described method, or may be replaced or substituted by other elements or equivalents to achieve appropriate results.

**Claims**

1. An electronic apparatus (100) for evaluating quality of an image, the electronic apparatus (100) comprising:

   a memory (110) in which at least one instruction is stored; and
   at least one processor (130) configured to execute the at least one instruction stored in the memory (110) to obtain the image,
   extract a feature map comprising a feature of the image based on the image,
   calculate a quality score for each reference region of the image, based on the extracted feature map,
   calculate an importance for each reference region of the image, based on the extracted feature map, and
   evaluate the quality of the image according to a final quality score of the image calculated based on the quality score for each reference region and the importance for each reference region.

2. The electronic apparatus (100) of claim 1, wherein the at least one processor (130) is further configured to execute the at least one instruction to extract the feature map by inputting the image to a shifted window (Swin) transformer model.

3. The electronic apparatus (100) of claim 1 or 2, wherein the at least one processor (130) is further configured to execute the at least one instruction to extract the feature map by inputting the image to a revised-shifted window (Swin) transformer model,
   wherein the revised-Swin transformer model is a model obtained by revising a Swin transformer model so that the feature map is extracted by a window having a same resolution regardless of a resolution of the image.

4. The electronic apparatus (100) of claim 3, wherein a resolution of a window used in the revised-Swin transformer model is lower than a resolution of a window used in the Swin transformer model.

5. The electronic apparatus (100) of claim 1, wherein the reference region is a region corresponding to a unit area constituting the feature map.

6. The electronic apparatus (100) of any one of claims 1 to 5, wherein the image is divided into a plurality of reference regions,
   wherein the at least one processor (130) is further configured to execute the at least one instruction to calculate the quality score for each reference region by performing a convolution operation by using a first filter on the extracted feature map.

7. The electronic apparatus (100) of claim 6, wherein a resolution of the first filter corresponds to each of the plurality of reference regions.

8. The electronic apparatus (100) of claim 1, wherein the image is divided into a plurality of reference regions,
   wherein the at least one processor (130) is further configured to execute the at least one instruction to calculate the importance for each reference region by performing a convolution operation by using a second filter on the extracted feature map.

9. The electronic apparatus (100) of claim 8, wherein a resolution of the second filter corresponds to two or more of the plurality of reference regions.

10. The electronic apparatus (100) of claim 8 or 9, wherein a resolution of the second filter corresponds to two or more reference regions spaced apart from each other from among the plurality of reference regions.

11. An operating method of an electronic apparatus (100) for evaluating quality of an image, the operating method of the electronic apparatus (100) comprising:

    a step (S100) of obtaining the image;
    a step (S200) of extracting a feature map comprising a feature of the image based on the image;
    a step (S300) of calculating a quality score for each reference region of the image, based on the extracted feature map;
    a step (S400) of calculating an importance for each reference region of the image, based on the extracted feature map; and
    a step (S600) of evaluating the quality of the image according to a final quality score of the image calculated based on the quality score for each reference region and the importance for each reference region.

12. The operating method of the electronic apparatus (100) of claim 11, wherein the step (S200) of extracting the feature map comprises extracting the feature map by inputting the image to a shifted window (Swin) transformer model.

13. The operating method of the electronic apparatus (100) of claim 11 or 12, wherein the step (S200) of extracting the feature map comprises extracting the feature map by inputting the image to a revised-shifted window (Swin) transformer model,
    wherein the revised-Swin transformer model is a model obtained by revising a Swin transformer model so that the feature map is extracted by a window having a same resolution regardless of a resolution of the image.

14. The operating method of the electronic apparatus (100) of claim 13, wherein a resolution of a window used in the revised-Swin transformer model is lower than a resolution of a window used in the Swin transformer model.

15. A computer-readable recording medium having recorded thereon a program for performing the operating method of any one of claims 11 to 14 on a computer.

# FIG. 1

# FIG. 2

START

OBTAIN IMAGE — S100

EXTRACT FEATURE MAP BASED ON IMAGE — S200

S300
CALCULATE QUALITY SCORE
FOR EACH REFERENCE REGION
BASED ON FEATURE MAP

S400
CALCULATE IMPORTANCE FOR
EACH REFERENCE REGION
BASED ON FEATURE MAP

CALCULATE FINAL QUALITY SCORE
BASED ON QUALITY SCORE AND IMPORTANCE — S500

EVALUATE QUALITY OF IMAGE
ACCORDING TO FINAL QUALITY SCORE — S600

END

# FIG. 3

**FIG. 4A**

# FIG. 4B

# FIG. 5

FIG. 6

# FIG. 7

$$\frac{P}{2^g} \quad 330$$

$$C$$

$$\frac{Q}{2^g}$$

340

341

FIRST
CONVOLUTION LAYER

342

FIRST
ACTIVATION LAYER

350

# FIG. 8

$\dfrac{P}{2^g}$ 330

C

$\dfrac{Q}{2^g}$

360

362

| FIRST SUB-CONVOLUTION LAYER |
| --- |

363

| SECOND SUB-CONVOLUTION LAYER |
| --- |

364

| THIRD SUB-CONVOLUTION LAYER |
| --- |

365

| CONNECTION LAYER |
| --- |

366

| THIRD CONVOLUTION LAYER |
| --- |

367

| SECOND ACTIVATION LAYER |
| --- |

$\left.\begin{matrix} 362 \\ 363 \\ 364 \end{matrix}\right\} 361$

370

# FIG. 9

FIG. 10

P 300

Q

310
REVISED-SWIN TRANSFORMER MODEL

320
$\frac{P}{2^g} \times \frac{Q}{2^g} \times C$ features

310
C
$\frac{Q}{2^g}$

340
REGION QUALITY CALCULATION MODEL

360
REGION IMPORTANCE CALCULATION MODEL

350

370

380
FINAL QUALITY CALCULATION MODEL

1000
LOSS CALCULATION MODEL

1010

EP 4 641 489 A1

# FIG. 11

1100

**DISPLAY APPARATUS**

1110

DISPLAY

1140

1120

MEMORY

1130

IMAGE QUALITY
EVALUATION MODULE

PROCESSOR

# FIG. 12

1200

ELECTRONIC APPARATUS

1210

MEMORY

1220

IMAGE CONVERSION MODULE

1230

IMAGE QUALITY
EVALUATION MODULE

1240

PROCESSOR

1250

COMMUNICATION INTERFACE

## INTERNATIONAL SEARCH REPORT

| International application No. |
|---|
| **PCT/KR2024/095318** |

| A. | CLASSIFICATION OF SUBJECT MATTER |
|---|---|

**G06T 7/00**(2006.01)i; **G06V 10/40**(2022.01)i; **G06V 10/776**(2022.01)i; **G06T 3/60**(2006.01)i; **G06T 5/20**(2006.01)i; **G06T 3/40**(2006.01)i; **G06N 3/0464**(2023.01)i

According to International Patent Classification (IPC) or to both national classification and IPC

| B. | FIELDS SEARCHED |
|---|---|

Minimum documentation searched (classification system followed by classification symbols)

G06T 7/00(2006.01); G06F 9/30(2006.01); G06F 9/50(2006.01); H01J 37/22(2006.01); H04N 19/132(2014.01); H04N 19/184(2014.01); H04N 21/442(2011.01); H04N 21/466(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 특성 맵(feature map), 영역(area), 품질(quality), 점수(score), 중요도(importance), 평가(evaluation), Swin 트랜스포머(Shifted windows Transformer), 해상도(resolution), 컨볼루션(convolution)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2016-149010 A (TOSHIBA CORP.) 18 August 2016 (2016-08-18)<br>See paragraphs [0069]-[0072]; and claims 1 and 10. | 1-2,5-6,8,11-12,15 |
| A | | 3-4,7,9-10,13-14 |
| Y | KR 10-2020-0044652 A (SAMSUNG ELECTRONICS CO., LTD.) 29 April 2020 (2020-04-29)<br>See paragraph [0050]; claims 1-4; and figure 3. | 1-2,5-6,8,11-12,15 |
| Y | KR 10-2019-0111810 A (NANJING HORIZON ROBOTICS TECHNOLOGY CO., LTD.) 02 October 2019 (2019-10-02)<br>See paragraph [0165]. | 2,12 |
| A | JP 2021-111360 A (HITACHI METALS LTD.) 02 August 2021 (2021-08-02)<br>See claims 1-7. | 1-15 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 May 2024** | **13 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/095318** |

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0014715 A (SAMSUNG ELECTRONICS CO., LTD.) 07 February 2022 (2022-02-07)<br>See claims 1-20. | 1-15 |

Form PCT/ISA/210 (second sheet) (July 2022)

## INTERNATIONAL SEARCH REPORT
### Information on patent family members

International application No.

**PCT/KR2024/095318**

| Patent document cited in search report | | | Publication date (day/month/year) | Patent family member(s) | | | Publication date (day/month/year) |
|---|---|---|---|---|---|---|---|
| JP | 2016-149010 | A | 18 August 2016 | US | 2016-0239984 | A1 | 18 August 2016 |
| | | | | US | 9830363 | B2 | 28 November 2017 |
| KR | 10-2020-0044652 | A | 29 April 2020 | EP | 3844962 | A1 | 07 July 2021 |
| | | | | EP | 3866466 | A1 | 18 August 2021 |
| | | | | EP | 3868096 | A1 | 25 August 2021 |
| | | | | EP | 3868097 | A1 | 25 August 2021 |
| | | | | EP | 3869803 | A1 | 25 August 2021 |
| | | | | KR | 10-2020-0044653 | A | 29 April 2020 |
| | | | | KR | 10-2020-0044662 | A | 29 April 2020 |
| | | | | KR | 10-2312337 | B1 | 14 October 2021 |
| | | | | KR | 10-2312338 | B1 | 14 October 2021 |
| | | | | KR | 10-2500761 | B1 | 16 February 2023 |
| | | | | KR | 10-2525576 | B1 | 26 April 2023 |
| | | | | KR | 10-2525577 | B1 | 26 April 2023 |
| | | | | KR | 10-2525578 | B1 | 26 April 2023 |
| | | | | US | 2021-0044813 | A1 | 11 February 2021 |
| | | | | US | 2021-0056665 | A1 | 25 February 2021 |
| | | | | US | 2021-0056666 | A1 | 25 February 2021 |
| | | | | US | 2021-0118189 | A1 | 22 April 2021 |
| | | | | US | 2021-0134020 | A1 | 06 May 2021 |
| | | | | US | 2021-0350586 | A1 | 11 November 2021 |
| | | | | US | 2021-0358083 | A1 | 18 November 2021 |
| | | | | US | 2021-0385502 | A1 | 09 December 2021 |
| | | | | US | 2022-0030260 | A1 | 27 January 2022 |
| | | | | US | 2022-0138904 | A1 | 05 May 2022 |
| | | | | WO | 2020-080751 | A1 | 23 April 2020 |
| | | | | WO | 2020-080765 | A1 | 23 April 2020 |
| | | | | WO | 2020-080782 | A1 | 23 April 2020 |
| | | | | WO | 2020-080827 | A1 | 23 April 2020 |
| | | | | WO | 2020-080873 | A1 | 23 April 2020 |
| KR | 10-2019-0111810 | A | 02 October 2019 | EP | 3543856 | A1 | 25 September 2019 |
| | | | | JP | 2019-169150 | A | 03 October 2019 |
| | | | | US | 2019-0294438 | A1 | 26 September 2019 |
| JP | 2021-111360 | A | 02 August 2021 | | None | | |
| KR | 10-2022-0014715 | A | 07 February 2022 | US | 2022-0036536 | A1 | 03 February 2022 |
| | | | | WO | 2022-025423 | A1 | 03 February 2022 |

Form PCT/ISA/210 (patent family annex) (July 2022)